# FASCICULE DE BREVET EUROPEEN

(11) **EP 3 310 656 B1**
(45) Date de publication et mention de la délivrance du brevet: **07.08.2019**
(21) Numéro de dépôt: 16733699.9
(22) Date de dépôt: 13.06.2016
(51) Int. Cl.: B64C 39/02

(54) **SYSTÈME FILAIRE SÉCURISÉ POUR DRONE**
SICHERES DRAHTGEBUNDENES SYSTEM FÜR EINE DROHNE
SECURE WIRE-BASED SYSTEM FOR A DRONE

(43) Date de publication de la demande: 25.04.2018
(73) Titulaire: ELISTAIR, 69005 Lyon (FR)
(72) Inventeur: PENET, Timothée, Hervé, Marc, Marie, 69005 Lyon (FR); DE MARLIAVE, Guilhem, Marie, Christian, 69002 Lyon (FR); DUBOIS, Olivier, Bernard, François, 69005 Lyon (FR)
(74) Mandataire: Verriest, Philippe
(86) Numéro de dépôt international: PCT/IB2016/053470
(87) Numéro de publication internationale: WO 2016/203359

(56) Documents cités:
- WO-A1-2010/092253
- WO-A1-2013/150442
- WO-A1-2013/162128

## Description

### DOMAINE TECHNIQUE DE L'INVENTION

Le domaine technique de l'invention est l'ensemble des systèmes filaires pour drones à voilures tournantes. Plus précisément, un drone désigne un engin volant piloté à distance au moyen d'un dispositif de contrôle. Certains drones sont dits à voilure tournante, ce qui comprend toutes les formules de modèles réduits d'hélicoptères connues. Les drones dont il s'agit ici sont les drones à voilure tournante, reliés à une base au sol par l'intermédiaire d'un fil, le fil ayant souvent pour fonction l'alimentation électrique du drone, ou le transfert de donnée, ou le rôle de confiner le drone dans une zone de sécurité.

### TECHNIQUE ANTÉRIEURE

Dans le domaine des drones filaires, il est connu d'utiliser des systèmes filaires comportant un fil, un enrouleur du fil comprenant un tambour d'enroulement du fil et un moteur électrique d'entraînement du tambour. Le fil est alors généralement maintenu avec une tension ajustée qui permet au drone d'évoluer facilement sans que le fil ne touche le sol. Par exemple, les documents WO2010/092253, WO2013/162128, WO2013/150442 décrivent des systèmes filaires reliant un drone à sa base au sol.

Le volume d'opération du drone est une demi sphère de rayon la longueur du fil. La zone possible d'écrasement du drone est un disque de rayon la longueur du fil. Les drones filaires sont notamment utilisés dans des zones sensibles où le drone ne doit pas pouvoir s'aventurer au-delà de certaines limites. Les zones sensibles sont par exemple les aéroports, les industries critiques, les zones peuplées.

Il est connu d'utiliser comme blocage d'urgence un frein à commande manuelle pour limiter la longueur maximale du fil déroulé. Le blocage d'urgence est généralement réalisé par un télépilote ou un opérateur de drone. Ce blocage est souvent réalisé par un frein équipant l'enrouleur du fil.

Comme on le comprendra, dans le cas d'un blocage manuel, la zone d'écrasement possible du drone reste déterminée par la longueur totale du fil reliant le drone à sa base, car l'opérateur reste faillible ; de plus, le blocage manuel induit des difficultés de réenroulement du fil et le pilotage du drone en est perturbé.

### EXPOSÉ DE L'INVENTION

L'invention consiste en un système filaire sécurisé pour drone permettant de remédier aux inconvénients cités précédemment, c'est à dire de limiter le périmètre d'action du drone de manière fiable.

Le système selon l'invention est défini par la revendication 1. Il permet de réduire de manière certaine la zone d'écrasement possible du drone au sol à une longueur prédéfinie par l'utilisateur. De plus, le système filaire conserve ses capacités d'enroulement du fil même en cas de blocage à cette longueur prédéfinie, et assure sur le fil la tension normale de fonctionnement dès que le drone revient dans sa zone normale de vol, ce qui facilite grandement le pilotage du drone.

Le système filaire selon l'invention comporte en effet suivant une première caractéristique un dispositif de réglage permettant à l'utilisateur de définir une longueur maximale de fil déroulé, et suivant une deuxième caractéristique un dispositif de blocage automatique à la longueur maximale définie, le dispositif de blocage étant monodirectionnel : il permet de ne pas dépasser la longueur maximale définie, mais le réenroulement du fil sur son tambour reste possible.

Selon des modes particuliers de réalisation :
- le mécanisme de blocage est un mécanisme anti-retour à cliquet ;
- le mécanisme de blocage est assuré par une ou plusieurs surépaisseurs sur le fil, réglables ou non ;
- le mécanisme de blocage est un simple frein par contact asservi à la longueur du fil, la caractéristique monodirectionnelle du frein est assurée par la procédure suivante : (i) déclenchement du frein à une longueur inférieure ou égale à la longueur définie par l'utilisateur, (ii) augmentation du couple de rappel du moteur à son maximum, (iii) relâchement progressif du frein jusqu'à un mouvement du tambour, (iv) détection du sens de rotation du tambour, (v) relâchement du frein progressif si le sens de rotation du tambour conduit à l'enroulement du fil. Une autre procédure selon un autre mode de réalisation prévoit : (i) déclenchement du frein à la longueur définie par l'utilisateur, (ii) mesure de la tension du fil, (iii) relâchement du frein lorsque le couple moteur est suffisamment important pour équilibrer la tension du fil mesurée, - le fil est physiquement bloqué directement sur la bobine à longueur déterminée par l'utilisateur ;
- le capteur de tour du tambour est utilisé pour déterminer la longueur du fil déroulé ;
- le fil est muni de balises de longueur et d'un détecteur comptant ces balises ;
- l'augmentation automatique du couple de rappel moteur à l'approche de la longueur maximale de fil définie par l'utilisateur assure un blocage doux du drone afin de ne pas déstabiliser le drone ;
- un dispositif d'alarme visuelle ou auditive vise en outre à informer l'utilisateur que la longueur maximale est en passe d'être atteinte ;
- une procédure de rappel du drone prévoit en cas de dysfonctionnement du drone à la fois le déclenchement du mécanisme de blocage monodirectionnel, l'ouverture d'un parachute de secours du drone, l'exercice d'un couple de rappel du moteur suffisant pour ramener le drone près de sa base.

L'invention concerne également un ensemble tel que défini dans la revendication 11.

### DESCRIPTION SOMMAIRE DES DESSINS

- la figure 1 est une vue d'ensemble comprenant un drone (11) et un système filaire (X1) muni d'un mécanisme de blocage monodirectionnel (X2) automatique conforme à un premier mode de réalisation de l'invention, le drone étant en vol ;
- la figure 2 est une vue détaillé du mécanisme de blocage monodirectionnel (X2) ;
- la figure 3 est une vue détaillée des surépaisseurs (31) du fil assurant le blocage à la longueur de sécurité ;
- la figure 4 est une vue de dessus d'un mode de réalisation du système réglable de blocage du fil comportant des surépaisseurs (31) ;
- la figure 5 est une vue de coté du système réglable de blocage du fil (10) comportant des surépaisseurs (31) ;
- la figure 6 est une vue d'un mode de réalisation du système de mesure de la longueur de fil comportant des balises (61) ;
- la figure 7 est une d'un mode de réalisation du système de blocage par bloqueur (71) du fil (10) solidaire du tambour à la longueur de sécurité ;
- la figure 8 est un mode de réalisation du frein du tambour (14) sur lequel est enroulé le fil (10) ;
- la figure 9 est un mode de réalisation du capteur de tension du fil (10).

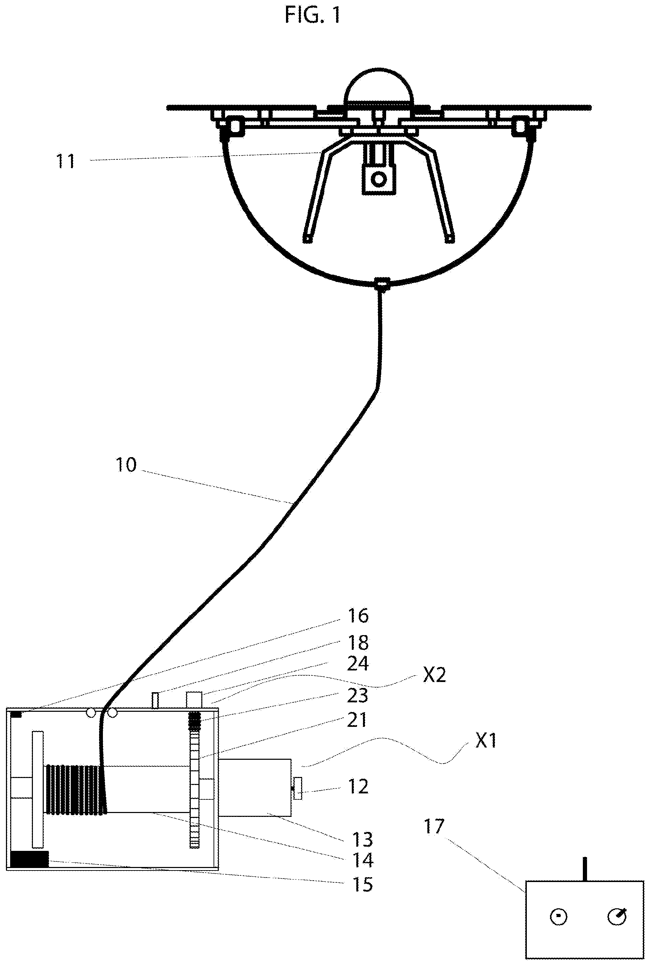

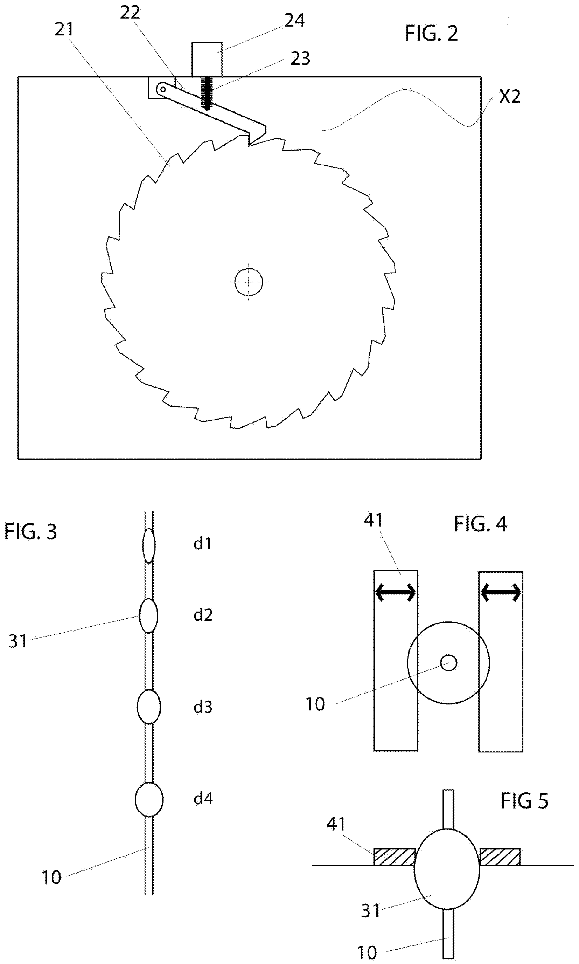

De manière plus explicite, le système filaire (X1) pour drone (11) visible à la figure 1 comprend un mécanisme de blocage dont des modes de réalisation sont détaillés dans les figures 2, 3, 4, 5 et 7, un tambour (14) sur lequel est enroulé le fil (10) et un moteur (13) qui assure la rotation du tambour. Le système filaire est relié au secteur électrique ou à une batterie au sol. Un exemple important de fil (10), souvent utilisé pour les drones filaires est constitué de deux câbles électriques pour l'alimentation du drone, d'une fibre optique pour le transfert de données, de brins d'aramide pour assurer à l'ensemble une tenue à des tractions de l'ordre de 100kg, et d'une gaine de protection, le tout faisant un diamètre d'environ 3mm. De façon connue en soi, le drone (11) comporte, entre autres, des moteurs d'entraînement de pales de sustentation. Le drone (11) est souvent équipé de différents capteurs, notamment des capteurs d'image. Les drones électriques les plus répandus sont non filaires et alimentés par batterie, ce qui leur confère une autonomie limitée, tandis que le même drone sur lequel la batterie est remplacée par l'alimentation filaire a une autonomie illimitée. En général, une batterie de secours est conservée sur le drone (11) filaire, afin de laisser le temps à l'utilisateur de poser le drone (11) en cas de dysfonctionnement du système d'alimentation filaire. Le drone (11) filaire peut néanmoins être entièrement alimenté par batterie, puisque le fil (10) peut être uniquement un fil de transfert de donnée, ou un fil de tenue mécanique, ou un fil contenant un tuyau afin de faire passer un liquide. Le drone est commandé par un poste de pilotage du drone (17) représenté par une télécommande mais peut aussi être de toute autre forme par exemple un ordinateur. Le compte-tours (12) de longueur du fil déroulé qui peut être un encodeur rotatif sur l'axe de rotation du tambour (14). De façon connue, un moteur (13) exerce un couple sur le tambour (14) pour enrouler ou dérouler le fil (10). Le compte-tours (12) informe le dispositif de contrôle (15) de la longueur de fil déroulée. Le dispositif de contrôle (15) active ou non le mécanisme de blocage monodirectionnel (X2), il commande également le couple de rappel du moteur par l'intermédiaire par exemple d'un asservissement en courant. Un système d'alarme (16) par exemple un haut-parleur avertit l'utilisateur lorsque la longueur du fil déroulée est proche de la longueur maximale définie par l'utilisateur. Un commutateur rotatif (18) permet de régler la longueur du fil maximal.

Un exemple de mécanisme de blocage monodirectionnel (X2) est représenté à la figure 2. Le cliquet (22) est maintenu en position basse grâce au ressort (23), la roue dentée (21) solidaire du tambour (14) ne peut tourner que dans un seul sens, celui de l'enroulement du fil. Lorsque le dispositif de contrôle (15) met l'actionneur électromagnétique (24) en position haute, le cliquet est en position haute, et le tambour peut tourner dans le deux sens.

Un exemple de mécanisme de blocage du fil par surépaisseur est représenté figure 3, 4 et 5. Des surépaisseurs (31) sont fixées sur le fil par l'utilisateur ou de façon définitive. Lorsqu'elles sont fixées de manière préalables, elles sont positionnés par exemple aux longueurs d1 : 20 mètres, d2 : 40 mètres, d3 : 60 mètres et d4 : 80 mètres. Les surépaisseurs ont des diamètres croissants. Cela permet à l'utilisateur de régler les barres (41) de blocage de la section de sortie du fil (10) en fonction de la longueur de sécurité souhaitée.

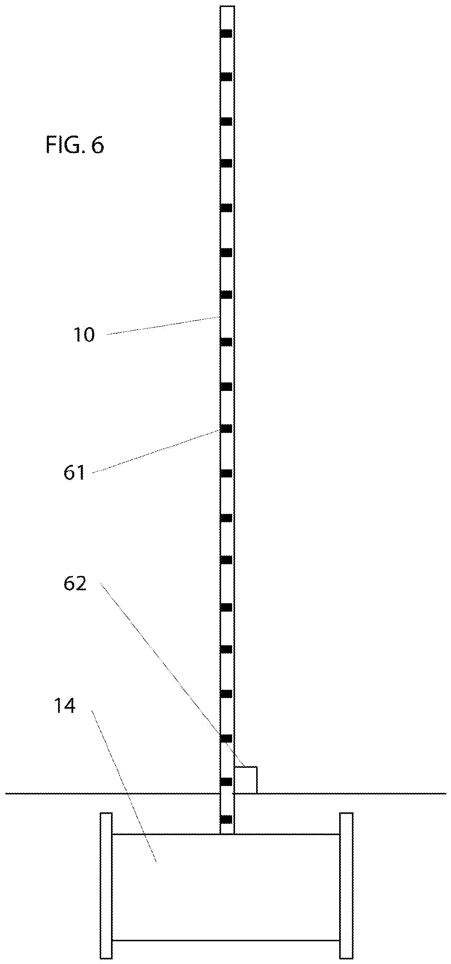

Un exemple de capteur de longueur figure 6 permet à l'utilisateur et ou au dispositif de contrôle (15) de connaître la longueur du fil déroulée. Des balises (61) optiques ou magnétiques par exemples sont disposées à intervalles réguliers de l'ordre de 5 cm sur le fil (10). Un capteur (62) détecte la longueur du fil déroulé, et informe le dispositif de contrôle (15). Pour mesurer la longueur du fil déroulé, on peut éventuellement utiliser le capteur (62) seul, ou le compte-tour (12) seul, ou combiner les deux pour avoir une mesure très précise.

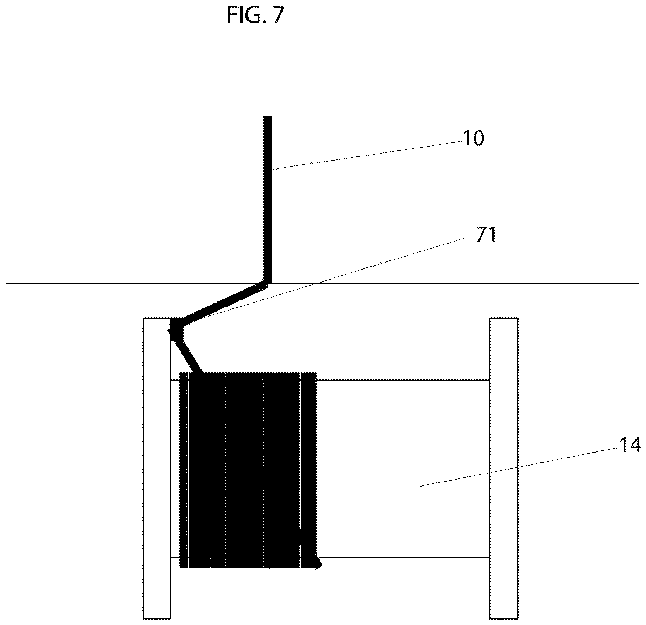

Un autre exemple du blocage prédéterminé du fil est représenté figure 7. Il comporte un bloqueur mécanique (71) de type coinceur ou simple crochet dans lequel l'utilisateur bloque le fil à la longueur souhaitée. Ce mécanisme solidaire du tambour (14) assure le blocage du fil de manière monodirectionnelle. En effet le fil peut se dérouler jusqu'à la longueur déterminée par l'utilisateur. A cette longueur le drone ne peut plus dérouler le fil puisque le fil est bloqué par le coinceur.

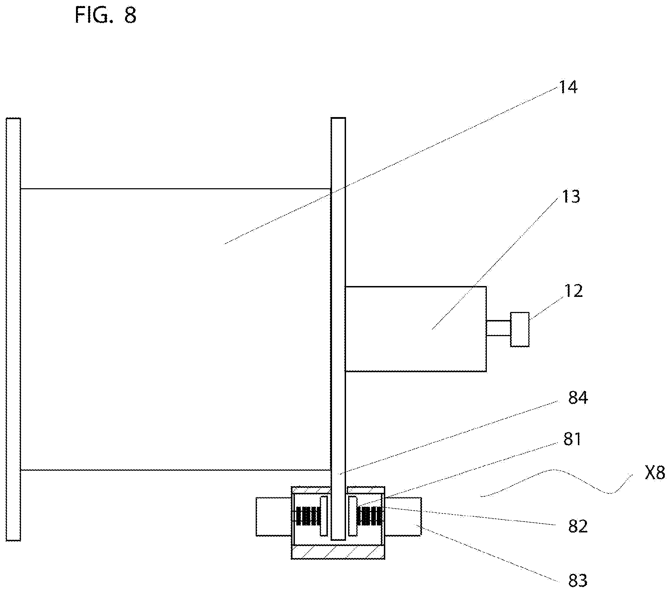

Un exemple de frein figure 8 est composé de deux puissants ressorts (82), de deux actionneurs électromagnétiques (83) et de deux plaquette (81) de frein. Les ressorts exercent une force sur les plaquettes qui elles mêmes en exercent une sur le disque (84) lorsque les actionneurs ne sont pas alimentés. Cette force de frottement empêche le déroulement du fil. Lorsque les actionneurs électromagnétiques sont alimentés, ils compriment les ressorts et libèrent le disque solidaire du tambour (14).

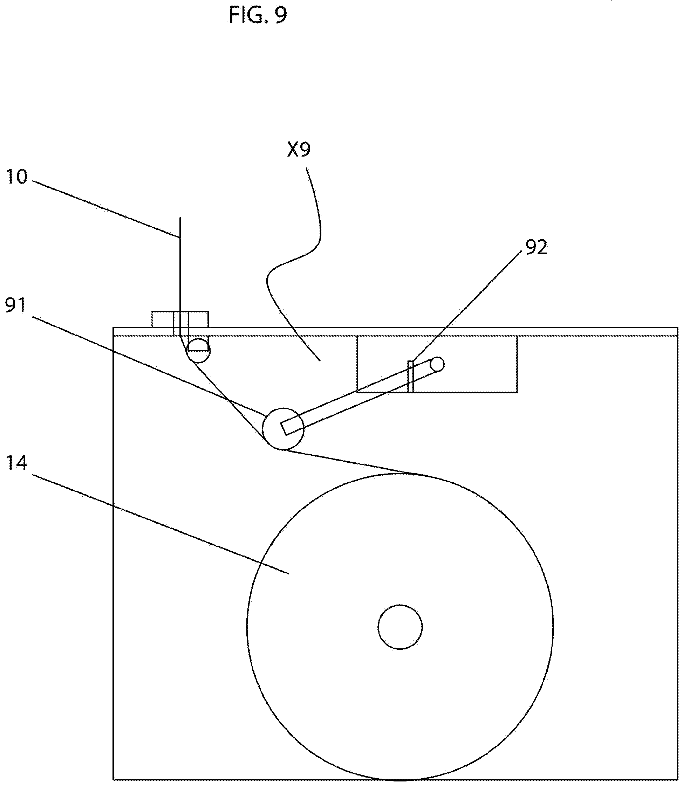

Un exemple de capteur de tension du fil est présenté figure 9. La poulie d'appui (91) est montée sur un bras rotatif. La hauteur du bras dépend de la tension du fil. Plus le fil est tendu plus le bras monte. Un capteur de position (92) qui peut être par exemple un potentiomètre linéaire détecte la position du bras. Le mécanisme de commande (15) est ainsi informé de l'état de tension du câble.

### MEILLEURE MANIÈRE DE RÉALISER L'INVENTION

Une manière optimale de réaliser le système selon l'invention consiste en un premier mode de réalisation que nous décrivons maintenant. Selon ce mode de réalisation, une roue dentée (21) est coaxiale du tambour (14) d'enroulement du fil (10) et solidaire du tambour. Un cliquet (22) est en rotation autour d'un point solidaire du bâti de la base, tandis qu'un ressort (23) relie le point médian du cliquet à un actionneur électromagnétique (24). L'actionneur est alimenté en 12V. En l'absence d'alimentation de l'actionneur électromagnétique, l'actionneur est en position basse, si bien que le tambour ne peut tourner que dans un sens (celui de l'enroulement) ; lorsque l'actionneur est alimenté, il est en position haute, si bien que le tambour peut tourner dans les deux sens. En fonctionnement normal du drone, l'actionneur est alimenté. L'utilisateur entre par l'intermédiaire du dispositif de contrôle du drone la longueur maximale du fil à dérouler. Le dispositif de contrôle (15) crée alors dans la mémoire du contrôleur embarqué trois variables que sont, premièrement, la longueur maximale du fil définie par l'utilisateur, deuxièmement, la longueur d'alarme égale à la longueur maximale diminuée d'une distance paramétrable égale à 5 mètres par défaut, et, troisièmement, la longueur d'urgence égale à la longueur maximale diminuée d'une distance paramétrable égale à 1 mètre par défaut. Dans ce premier mode de réalisation selon l'invention, un commutateur rotatif (18) 11 positions permet de régler la longueur maximale entre 0 et 100m par pas de 10m. La longueur déroulée par le fil est mesurée par l'intermédiaire d'un compte-tours (12). Dans notre système filaire selon l'invention, la précision du compte-tour est de +- 1 degré et la précision de l'évaluation de la longueur est de +-1%.

Lorsque la longueur du fil déroulé par le drone en vol est supérieure à la distance d'alarme, une notification sonore informe l'utilisateur : des bips émis par le haut parleur de la base de fréquence d'autant plus rapide que la distance d'urgence se rapproche. Lorsque le fil est déroulé sur une distance supérieure ou égale à la longueur d'urgence, le bip est continu, tandis qu'à la longueur d'alarme, on entend un bip d'un dixième de seconde toutes les 4 secondes. Tant que le drone (11) vole à une distance inférieure ou égale à la longueur maximale, le système filaire assure par l'intermédiaire du moteur (13) une tension constante paramétrable par l'intermédiaire d'un potentiomètre rotatif sur la base. Ce potentiomètre rotatif fait varier le couple moteur de rappel entre 0 et son couple maximal. L'intensité du couple moteur de rappel, et donc la tension du fil est généralement définie avant le vol, même si l'utilisateur peut réajuster la position du potentiomètre pendant le vol. Au moment où le fil est déroulé sur une longueur égale à la longueur maximale, le dispositif de contrôle cesse d'alimenter l'actionneur (24). Le cliquet (22) tombe. La roue dentée (21) et donc le tambour (14) sont bloqués dans le sens du déroulement du fil, mais pas dans le sens de l'enroulement du fil. Lorsque le drone (11) se rapproche de la base, le moteur enroule le fil (10) sur le tambour. L'actionneur (24) du cliquet anti-déroulement est à nouveau alimenté dès que la longueur mesurée par le système est inférieure à la distance d'urgence : le tambour peut à nouveau tourner dans les deux sens. Lorsque le tambour est bloqué à la longueur maximale du fil définie par l'utilisateur, et que la configuration met en péril la mission, l'utilisateur peut décider immédiatement d'augmenter la longueur maximale du fil en tournant le commutateur rotatif (18), les variables en mémoire sont immédiatement recalculées en fonction de la position du commutateur, et l'actionneur est alors réalimenté, ce qui permet de libérer le tambour : il peut tourner à la fois dans le sens de l'enroulement et du déroulement. Inversement, si l'utilisateur ou le dispositif de contrôle (15) réalise qu'il doit bloquer le drone (11) d'urgence et le rapatrier, il peut régler la longueur maximale à 0m, ce qui aura pour effet de désalimenter l'actionneur, le drone ne pourra plus s'éloigner de la base, il ne pourra que se rapprocher. En cas de dysfonctionnement du drone, par exemple la détection de sa chute par un capteur d'accélération, une procédure prévoit à la fois l'ouverture d'un parachute de secours du drone (11), le déclenchement du mécanisme de blocage monodirectionnel, et un couple moteur qui selon ce mode de réalisation assure une tension du fil égale au poids du drone. Par exemple, si au moment du dysfonctionnement le fil a un angle de 45 ° avec la verticale, le drone est ramené vers le sol avec un vecteur vitesse dont l'angle avec la verticale est égal à 22,5 °. Cela permet de réduire encore la surface d'écrasement possible du drone. Des variantes de ce mode de réalisation consistent à remplacer le mécanisme de cliquet par un mécanisme équivalent d'éléments roulants par coincement, ou un mécanisme équivalent de cames par obstacle. Ces mécanismes équivalents sont bien connus des gens du métier, ceux qui fabriquent les roues libres, et ne demandent pas une description plus poussée.

L'alarme décrite dans ce mode de réalisation est optionnelle, même si elle facilite considérablement le pilotage. L'alarme peut avantageusement être retransmise au niveau des haut-parleurs du poste de pilotage. Au niveau du poste de pilotage peut également figurer la mesure de la longueur de fil déroulé mesurée par le compte-tour, ainsi que la longueur maximale définie par l'utilisateur. La longueur déroulée peut s'afficher en caractère gras et rouge lorsque la longueur d'alarme est dépassée. Sur les postes de pilotage évolués, on peut supprimer le commutateur rotatif (18) sur la base et régler au mètre près la longueur maximale définie par l'utilisateur. De manière optionnelle, pour éviter un blocage brusque du drone qui risque de le déstabiliser, on peut augmenter le couple moteur linéairement entre la distance d'urgence et la distance maximale définie par l'utilisateur.

### AUTRES MANIÈRES DE RÉALISER L'INVENTION

Nous décrivons maintenant deux autres manières de réaliser le système selon l'invention, dont les avantages se comprennent par eux-même.

Selon un deuxième mode de réalisation de l'invention, la roue dentée est remplacée par un mécanisme de blocage du fil par 4 surépaisseurs (31) fixées de manière définitive sur le fil (10). Ces surépaisseurs peuvent être des boules. La première boule a un diamètre de 4mm et est fixée à 20m à compter de la position d'accroche du drone, la seconde un diamètre de 5mm et est fixée à 40m à compter de la position d'accroche du drone, la troisième un diamètre de 6mm et est fixée à 60m à compter de la position d'accroche du drone, la quatrième un diamètre de 7mm et est fixée à 80m de la position d'accroche du drone. Le fil (10) est initialement entièrement enroulé autour du tambour, sauf l'extrémité du fil qui passe au travers d'un trou. Cette extrémité étant reliée au drone. Le trou est de diamètre réglable et prévoit 5 positions : 20m (diamètre correspondant 3,5mm), 40m (diamètre correspondant 4,5mm), 60m (diamètre correspondant 5,5mm), 80m (diamètre correspondant 6,5mm), 100m (diamètre correspondant 7,5mm). Lorsque le diamètre est réglé à une position, par exemple 40m, le trou peut laisser le fil se dérouler sur une longueur égale à 40m à compter du trou, mais pas plus. En effet, la première boule qui correspond à 20m de fil peut passer dans le trou, mais la seconde boule ne peut pas passer, puisque son diamètre de 5mm est supérieur au 4,5mm du trou. Le diamètre du trou est ajusté simplement par deux barres (41) de métal qui s'approchent ou s'éloignent du centre d'un trou de 10mm de diamètre. La section du trou peut être réglée par tout autre mécanisme équivalent. Selon certaines configurations avantageuses, on usine les bords des barres de manière à ce que les boules coulissent bien, et les boules sont remplacées par des formes plus complexes éventuellement souples qui coulissent mieux dans le trou et n'altèrent pas l'enroulement du fil sur le tambour. Selon une autre configuration équivalente, le fil ne comporte pas de boule au départ. Le fil est entièrement enroulé sur le tambour sauf l'extrémité qui passe par un trou de largeur réglable sur deux positions seulement : diamètre 5mm et diamètre 15mm. L'utilisateur dévide le fil sur la longueur maximale voulue au travers du trou réglé sur la position 15mm. A la longueur maximale voulue déroulée, l'utilisateur fixe une boule de 8mm de diamètre sur le fil. Il rembobine alors entièrement le fil sur le tambour. Il règle alors le diamètre du trou sur la position 5mm. Lorsque le drone (11) part en vol et déroule le fil, la boule vient en butée contre le trou. Le fil ne peut pas se dérouler davantage, et le réenroulement reste possible. On obtient ainsi également un système filaire de blocage monodirectionnel très simple à réaliser.

Selon un troisième mode de réalisation, un disque (84) est coaxial du tambour d'enroulement du fil et solidaire du tambour (14). Un frein (X8) solidaire du bâti vient serrer le disque. Par défaut le frein serre le disque grâce à deux puissants ressorts (82), et lorsque le frein est alimenté, le frein se déserre. L'utilisateur règle la longueur maximale du fil à dérouler par l'intermédiaire d'un commutateur rotatif (18) comme selon le premier mode de réalisation. Le calculateur embarqué crée deux variables que sont la longueur maximale et la longueur d'urgence, la même que dans le premier mode de réalisation. Lorsque le fil (10) est déroulé sur une distance inférieure à la distance d'urgence, le couple moteur normal de fonctionnement réglé par l'intermédiaire du potentiomètre rotatif est utilisé. Lorsque le fil est déroulé sur une longueur supérieure à la longueur d'urgence, le couple moteur est linéairement augmenté jusqu'à atteindre son couple maximal à la distance maximale définie par l'utilisateur. Si la distance maximale est atteinte, le frein n'est plus alimenté et est refermé sur le disque par les deux puissants ressorts. Les deux puissants ressorts sont suffisant pour bloquer le tambour même lorsque le fil exerce sa traction de rupture qui est de 100kg sur notre système. Le couple moteur de rappel reste à son maximum. Immédiatement après le blocage, le frein est réalimenté selon une pente douce de tension qui relâche progressivement la pression sur le disque jusqu'à rotation du tambour. Le compte-tours (12) détecte alors le sens de rotation du tambour. Si la rotation s'effectue dans le sens de l'enroulement, le frein est immédiatement réouvert, si bien que le fil est réenroulé, le couple moteur est toujours linéairement fonction de la longueur : le couple est au maximum à la longueur maximale, et à sa valeur normale de fonctionnement à la longueur d'urgence. Si inversement la rotation s'effectue dans le sens du déroulement, le frein est immédiatement réactivé : le glissement du à cette procédure est faible, de l'ordre de 1cm, même par une tension du fil de 100kg. Toutes les 10 secondes, la procédure de déserrage progressif du frein recommence, si bien que, dans un cas défavorable, la longueur maximale définie cm après cm est dépassée cm après cm. Lorsque la longueur maximale est dépassée de plus de 1m, le frein est définitivement bloqué. L'utilisateur peut alors manuellement débloquer le frein quand il reprend le contrôle de son drone en augmentant manuellement la longueur maximale sur la base, ce qui a pour effet un calcul immédiat des deux variables du contrôleur embarqué, et donc débloque le frein.

Les modes de réalisation et variantes envisagés ci-dessus peuvent être combinés entre eux pour générer de nouveaux modes de réalisation de l'invention.

### POSSIBILITÉS D'APPLICATIONS INDUSTRIELLES

Le système filaire sécurisé selon l'invention trouve ses applications pour tout utilisateur voulant limiter de manière fiable la zone possible d'écrasement en cas de dysfonctionnement du drone.

Ce système est ainsi particulièrement destiné aux aéroports, aux zones peuplées, ou aux zones industrielles critiques.

## Revendications

1. Système filaire (X1) apte à relier un drone à sa base au sol, ce système comprenant:
- ladite base au sol,
- au moins un fil (10) électrique ou un fil de transfert de donnée ou fil de maintien mécanique,
- au moins un tambour (14) d'enroulement du fil,
- au moins un moteur (13) électrique d'entraînement du tambour,
- au moins un mécanisme de blocage du fil, le système étant **caractérisé en ce qu'**il comporte à la fois :
- un dispositif de réglage permettant à l'utilisateur de définir une longueur maximale de fil déroulé,
- un dispositif de blocage automatique à la longueur maximale définie, le dispositif de blocage étant monodirectionnel : il permet de ne pas dépasser la longueur maximale, mais le réenroulement du fil sur son tambour reste possible.

2. Système selon la revendication 1, **caractérisé en ce que** le mécanisme de blocage monodirectionnel (X2) est un frein à crans d'arrêt.

3. Système selon la revendication 1, **caractérisé en ce que** le mécanisme de blocage est assuré par une ou plusieurs surépaisseurs (31) sur le fil, réglables ou non.

4. Système selon la revendication 1, **caractérisé en ce que** le système de blocage est un frein (X8) par contact asservi à la longueur du fil, la caractéristique monodirectionnelle du frein est assurée par l'une des procédures suivantes :
Procédure 1 : (i) déclenchement du frein à une longueur inférieure ou égale à la longueur définie par l'utilisateur, (ii) réglage du couple de rappel du moteur à son maximum (iii) relâchement progressif du frein jusqu'à un mouvement du tambour, (iv) détection du sens de rotation du tambour, (v) relâchement du frein progressif si le tambour tourne dans le sens de l'enroulement du fil.
Procédure 2 : (i) déclenchement du frein à la longueur définie par l'utilisateur, (ii) mesure de la tension du fil par un capteur de tension du fil par exemple (X9), (iii) relâchement du frein lorsque le couple moteur est suffisamment important pour équilibrer la tension du fil mesurée.

5. Système suivant la revendication 1, **caractérisé en ce que** le fil est physiquement bloqué par un bloqueur (71) directement sur le tambour à longueur déterminée par l'utilisateur.

6. Système selon l'une des revendications précédentes **caractérisé en ce qu'** un compte-tours (12) de tour du tambour est utilisé pour déterminer la longueur du fil déroulé.

7. Système selon l'une des revendications précédentes **caractérisé en ce que** le fil est muni de balises (61) de longueur et d'un capteur (62) comptant ces balises.

8. Système selon l'une des revendications précédentes, assurant un blocage doux pour ne pas déstabiliser le drone, par augmentation progressive du couple de rappel moteur (13) à l'approche de la longueur maximale de fil définie par l'utilisateur.

9. Système suivant l'une des revendications précédentes, **caractérisé en ce qu'**il comporte en outre un dispositif visant à informer l'utilisateur que la longueur maximale est en passe d'être atteinte.

10. Système selon l'une des revendications précédentes, **caractérisé en ce qu'**une procédure d'un dispositif de contrôle (15) prévoit à la fois :
- le déclenchement du mécanisme de blocage monodirectionnel
- l'ouverture d'un parachute de secours du drone (11)
- le déclenchement d'un couple moteur (13) suffisant pour rapatrier le drone vers sa base.

11. Ensemble comprenant un système filaire (X1) selon l'une des revendications précédentes et également :
- un drone (11),
- un poste de pilotage du drone (17),
- et le fil (10) reliant le drone à sa base.

## Patentansprüche

1. Drahtgebundenes System (X1), das eine Drohne mit ihrer Bodenstation verbinden kann, wobei dieses System umfasst:
- die Bodenstation,
- mindestens einen Elektrodraht (10) oder einen Datenübertragungsdraht oder mechanischen Haltedraht,
- mindestens eine Trommel (14) zum Aufwickeln des Drahts,
- mindestens einen Elektromotor (13) zum Antreiben der Trommel,
- mindestens einen Mechanismus zum Sperren des Drahts, wobei das System **dadurch gekennzeichnet ist, dass** es gleichzeitig umfasst:
- eine Einstellvorrichtung, die es dem Benutzer ermöglicht, eine maximale abgewickelte Drahtlänge zu definieren,
- eine Vorrichtung zum automatischen Sperren bei der definierten maximalen Länge, wobei die Sperrvorrichtung unidirektional ist: sie ermöglicht es, die maximale Länge nicht zu überschreiten, aber das Rückaufwickeln des Drahts auf seine Trommel bleibt möglich.

2. System nach Anspruch 1, **dadurch gekennzeichnet, dass** der unidirektionale Sperrmechanismus (X2) eine Sperrklinkenbremse ist.

3. System nach Anspruch 1, **dadurch gekennzeichnet, dass** der Sperrmechanismus von einer oder mehreren einstellbaren oder nicht einstellbaren Verdickungen (31) am Draht sichergestellt wird.

4. System nach Anspruch 1, **dadurch gekennzeichnet, dass** das Sperrsystem eine Kontaktbremse (X8) ist, die der Länge des Drahts unterworfen ist, wobei die unidirektionale Charakteristik der Bremse durch eines der folgenden Vorgehen sichergestellt wird:
Vorgehen 1: (i) Aktivieren der Bremse bei einer Länge, die kleiner als oder gleich der vom Benutzer definierten Länge ist, (ii) Einstellen des Rückstellmoments des Motors auf dessen Maximum, (iii) zunehmendes Lösen der Bremse bis zu einer Bewegung der Trommel, (iv) Erkennen der Drehrichtung der Trommel, (v) zunehmendes Lösen der Bremse, wenn sich die Trommel in der Richtung des Aufwickelns des Drahts dreht.
Vorgehen 2: (i) Aktivieren der Bremse bei der vom Benutzer definierten Länge, (ii) Messen der Spannung des Drahts durch einen Spannungssensor des Drahts zum Beispiel (X9), (iii) Lösen der Bremse, wenn das Motormoment ausreichend hoch ist, um die gemessene Spannung des Drahts auszugleichen.

5. System nach Anspruch 1, **dadurch gekennzeichnet, dass** der Draht bei der vom Benutzer bestimmten Länge physisch von einer Sperre (71) direkt an der Trommel gesperrt wird.

6. System nach einem der vorstehenden Ansprüche, **dadurch gekennzeichnet, dass** ein Umdrehungszähler (12) für Umdrehungen der Trommel verwendet wird, um die Länge des abgewickelten Drahts zu bestimmen.

7. System nach einem der vorstehenden Ansprüche, **dadurch gekennzeichnet, dass** der Draht mit Längenmarkierungen (61) und mit einem Sensor (62) ausgestattet ist, der diese Markierungen zählt.

8. System nach einem der vorstehenden Ansprüche, das durch zunehmendes Erhöhen des Motorrückstellmoments (13) beim Annähern an die vom Benutzer definierte maximale Drahtlänge ein sanftes Sperren sicherstellt, um die Drohne nicht zu destabilisieren.

9. System nach einem der vorstehenden Ansprüche, **dadurch gekennzeichnet, dass** es weiter eine Vorrichtung umfasst, die darauf abzielt, den Benutzer zu informieren, dass die maximale Länge in Kürze erreicht wird.

10. System nach einem der vorstehenden Ansprüche, **dadurch gekennzeichnet, dass** ein Vorgehen einer Steuervorrichtung (15) gleichzeitig vorsieht:
- das Aktivieren des unidirektionalen Sperrmechanismus,
- das Öffnen eines Rettungsfallschirms der Drohne (11),
- das Aktivieren eines Motormoments (13), das ausreichend ist, um die Drohne zu ihrer Basis zurückzuholen.

11. Set, das ein drahtgebundenes System (X1) nach einem der vorstehenden Ansprüche umfasst, und ebenfalls:
- eine Drohne (11),
- ein Pult zum Steuern der Drohne (17),
- und den Draht (10), der die Drohne mit ihrer Basis verbindet.

## Claims

1. A wired system (X1) adapted to link a drone to its ground base, this system comprising:
- said ground base,
- at least one electrical wire (10) or one data transfer wire or one mechanical holding wire,
- at least one drum (14) for winding the wire,
- at least one electric motor (13) for driving the drum,
- at least one mechanism for blocking the wire, the system being **characterized in that** it includes at the same time:
- a setting device enabling the user to define a maximum length of the unwound wire,
- a device for automatic blockage at the defined maximum length, the blocking device being monodirectional: it prevents exceeding the maximum length, but the rewinding of the wire on its drum remains possible.

2. The system according to claim 1, **characterized in that** the monodirectional blocking mechanism (X2) is a notched brake.

3. The system according to claim 1, **characterized in that** the blocking mechanism is ensured by one or several thickened portion(s) (31) on the wire, that are adjustable or not.

4. The system according to claim 1, **characterized in that** the blocking system is a contact brake (X8) servo-controlled on the length of the wire, the monodirectional feature of the brake is ensured by one of the following procedures:
Procedure 1: (i) triggering of the brake at a length shorter than or equal to the length defined by the user, (ii) setting of the return torque of the motor to maximum (iii) progressive release of the brake until a movement of the drum, (iv) detection of the direction of rotation of the drum, (v) progressive release of the brake if the drum rotates in the direction of winding of the wire.
Procedure 2: (i) triggering of the brake at the length defined by the user, (ii) measurement of the wire tension by a wire tension sensor for example (X9), (iii) release of the brake when the motor torque is large enough to balance the measured wire tension.

5. The system according to claim 1, **characterized in that** the wire is physically blocked by a blocker (71) directly on the drum to a length determined by the user.

6. The system according to any of the preceding claims, **characterized in that** a tachometer (12) for counting the turns of the drum is used to determine the length of the unwound wire.

7. The system according to any of the preceding claims, **characterized in that** the wire is provided with length beacons (61) and a sensor (62) counting these beacons.

8. The system according to any of the preceding claims, ensuring a soft blockage so as not to destabilize the drone, by progressive increase of the motor return torque (13) near the maximum length of the wire defined by the user.

9. The system according to any of the preceding claims, **characterized in that** it further includes a device aiming at informing the user that the maximum length is about to be reached.

10. The system according to any of the preceding claims, **characterized in that** a procedure of a control device (15) provides both:
- the triggering of the monodirectional blocking mechanism
- the opening of a rescue parachute of the drone (11)
- the triggering of a motor torque (13) sufficient to repatriate the drone towards its base.

11. A set comprising a wired system (X1) according to any of the preceding claims and also:
- a drone (11),
- a control station of the drone (17),
- and the wire (10) linking the drone to its base.
